# FASCICULE DE BREVET EUROPEEN

(11) **EP 4 433 185 B1**
(45) Date de publication et mention de la délivrance du brevet: **15.07.2026**
(21) Numéro de dépôt: 22821353.4
(22) Date de dépôt: 18.11.2022
(51) Int. Cl.: A63G 21/22

(54) **POULIE DE SECURITE ET DE CONFORT POUR TYROLIENNE**
SICHERHEITS- UND KOMFORTRIEMENSCHEIBE FÜR EINE ZIPLINE
SAFETY AND COMFORT PULLEY FOR ZIPLINE

(30) Priorité: 18.11.2021 FR 2112209
(43) Date de publication de la demande: 25.09.2024
(73) Titulaire: Gulli Concept, 33410 Laroque (FR)
(72) Inventeur: GULLI, Grégory, 33760 Escoussans (FR)
(74) Mandataire: Santarelli
(86) Numéro de dépôt international: PCT/EP2022/082479
(87) Numéro de publication internationale: WO 2023/089128

(56) Documents cités:
- WO-A1-2014/123750
- US-A1- 2015 266 454
- US-A1- 2018 214 782
- US-S- D 930 460

## Description

### DOMAINE TECHNIQUE

L'invention concerne une poulie de sécurité et de confort pour tyrolienne, du type de celle utilisée dans les parcs d'attraction, parcs aventure, parcs acrobatiques forestiers ou équivalents. Une telle poulie, est apte à être disposée sur un câble ou une corde, tendu et en pente. Ceci permet à un utilisateur, suspendu sous la poulie, de glisser le long dudit câble ou corde tout en évitant des accidents aux mains.

### TECHNIQUE ANTERIEURE

Il est connu que les tyroliennes nécessitent l'emploi de poulies. De telles poulies comprennent typiquement au moins deux réas, au moins autant d'arbres que de réas et une cage. La cage comprend deux flasques et une base. Les flasques sont sensiblement planes, sensiblement identiques, sensiblement parallèles, et sont reliées entre elles par la base. La cage enserre les réas, le plan de rotation des réas se confondant sensiblement avec un axe médiateur des flasques. Les arbres fixent les réas, qu'ils traversent en leur centre en traversant les deux flasques.

Les arbres sont parallèles entre eux et coplanaires. Les réas sont montés rotatif chacun autour de son arbre associé.

La poulie comprend encore, du côté opposé à la base, un anneau ou un crochet permettant une suspension d'un utilisateur, via un baudrier. La poulie comprend encore une ouverture permettant d'engager la poulie sur un câble ou une corde de manière à amener ledit câble ou corde dans les gorges disposées en périphérie des réas. Lorsque la poulie est en position sur un câble ou corde, la cage est orientée de manière à ce que les flasques et les plans de rotation des réas soient verticaux alignés avec le câble ou corde, à ce que la cage soit orientée de manière à ce que la base soit en haut et l'anneau ou crochet en bas. Un utilisateur suspendu sous la poulie peut alors, grâce à la rotation des réas sur le câble ou corde, descendre en glissant le long du câble ou corde.

En fait, les poulies généralement utilisées jusqu'à présent dans les systèmes de tyroliennes présentent surtout des risques de blessures aux mains.

Une des solutions pour éviter les blessures consiste à positionner les mains en dessous de la poulie sur ses propres longes. Dans ce cas, on risque de tourner automatiquement sur soi même et risque, notamment en fin de parcours, des chocs pouvant occasionner des douleurs au dos.

Pour réduire les risques, pendant sa descente l'utilisateur peut placer ses mains sous la poulie, au niveau de l'anneau ou crochet, ou encore au niveau d'un textile (sangle ou longe) reliant ledit anneau ou crochet au pontet de son baudrier. Un tel placement des mains est avantageux en ce qu'il éloigne les mains de l'utilisateur du câble ou corde, mobile et donc potentiellement vulnérant par friction, et éloigne les mains de l'utilisateur de la cage, et d'un risque de pincement entre réa et cage. Un tel placement des mains ne permet cependant pas d'orienter l'utilisateur relativement à la poulie, et donc au câble ou corde, et il se produit souvent une rotation de l'utilisateur autour d'un axe de suspension vertical.

Une autre solution est de poser une main sur la poulie et l'autre main en dessous, sur les longes. Dans ce cas, la main posée sur la poulie est proche du câble ainsi que des roues, ce qui peut donner lieu à des blessures aux doigts, à des retournements d'ongles et autres risques.

Un autre placement des mains possible, consiste à placer une ou deux mains sur la longe. Un tel placement des mains permet, via un couple exercé par la ou les mains sur la cage autour d'un axe vertical, un léger contrôle de la rotation de l'utilisateur. Cependant, il rapproche dangereusement la ou les mains de l'utilisateur du câble ou corde donnant lieu à un danger de blessure par friction, ou de la cage et du danger de pincement entre réa et cage auquel cela peut donner lieu.

Le document WO2014/123750A1 décrit un dispositif de poulie pour tyrolienne. Ce dispositif comprend un cadre principal comprenant une paire de parois latérales et un connecteur transversal par l'intermédiaire duquel les parois latérales se rejoignent. Une paire de réas est disposée entre les parois latérales, les réas pouvant être mis en prise par un câble et pouvant tourner afin de permettre le mouvement du dispositif le long du câble. Un raccord par lequel des poignées peuvent être fixées de manière amovible au cadre principal est disposé entre les parois latérales, et des réceptacles alignés présents dans les parois latérales permettent la réception de matériel, afin d'éviter que le câble ne sorte des réas pendant l'utilisation. Ce dispositif ne comporte pas de moyen de rappel pour faire revenir les poignées à une position fermée après leur relâchement.

### RÉSUMÉ DE L'INVENTION

La présente invention concerne une poulie de sécurité et de confort pour tyrolienne selon la revendication 1. Les aspects subsidiaires de l'invention sont fournis dans les revendications dépendantes.

### RÉSUMÉ DE LA DIVULGATION

L'invention propose de modifier une poulie pour offrir un placement sûr des mains sur la poulie, tout en offrant un moyen pour l'utilisateur d'exercer un couple sur la cage autour d'un axe vertical de suspension.

La présente invention a pour objet la réduction des risques précités.

Pour cela, l'invention a pour objet une poulie pour tyrolienne, comprenant au moins deux réas, autant d'arbre que de réa et une cage, la cage comprenant une première flasque sensiblement plane, une deuxième flasque sensiblement plane, sensiblement identique à la première flasque, et sensiblement superposée parallèlement à la première flasque et une base reliant les deux flasques, lesdits au moins deux arbres étant parallèles entre eux, coplanaires et traversant, sensiblement perpendiculairement, les deux flasques et lesdits au moins deux réas étant montés rotatifs, chacun autour de son arbre associé, entre les deux flasques, où la poulie comprend encore une première poignée disposée sur l'extérieur de la première flasque et une deuxième poignée disposée sur l'extérieur de la deuxième flasque.

Des caractéristiques ou des modes de réalisation particuliers, utilisables seuls ou en combinaison, sont :
- les deux poignées s'étendent, en utilisation, sensiblement parallèlement aux arbres,
- les deux poignées sont disposées symétriquement, relativement à un plan médiateur des deux flasques, en regard l'une de l'autre,
- un axe commun aux deux poignées est parallèle à un plan des arbres,
- l'axe commun des poignées est disposé, relativement au plan des arbres, du côté opposé à la base,
- une poulie comprenant deux arbres, l'axe des poignées est disposé dans un plan médiateur des deux arbres,
- les poignées sont escamotables,
- l'escamotage est réalisé par pliage en direction de la base,
- une poignée comprend encore un moyen de rappel, tendant à escamoter la poignée,
- une poignée est recouverte, au moins sur sa face tournée vers la base, d'une garniture en matériau antidérapant, tel un caoutchouc,
- une poignée comprend encore un arbre autorisant une rotation de la poignée autour de son axe d'extension.

### BRÈVE DESCRIPTION DES DESSINS

L'invention sera mieux comprise à la lecture de la description qui suit, faite uniquement à titre d'exemple, et en référence aux figures en annexe dans lesquelles :
- [Fig. 1] montre, en vue perspective, une poulie selon l'art antérieur,
- [Fig. 2] montre, en vue perspective, la poulie de la figure 1 et un placement de main,
- [Fig. 3] montre, en vue perspective, la poulie de la figure 1 et un autre placement de main,
- [Fig. 4] montre, en vue perspective, une poulie selon l'invention, poignées déployées,
- [Fig. 5] montre, en vue perspective, la poulie de la figure 4, poignées repliées,
- [Fig. 6] montre, en vue perspective, la poulie de la figure 4, en utilisation sur un câble et le placement des mains.

### DESCRIPTION DÉTAILLÉE DE MODES DE RÉALISATION

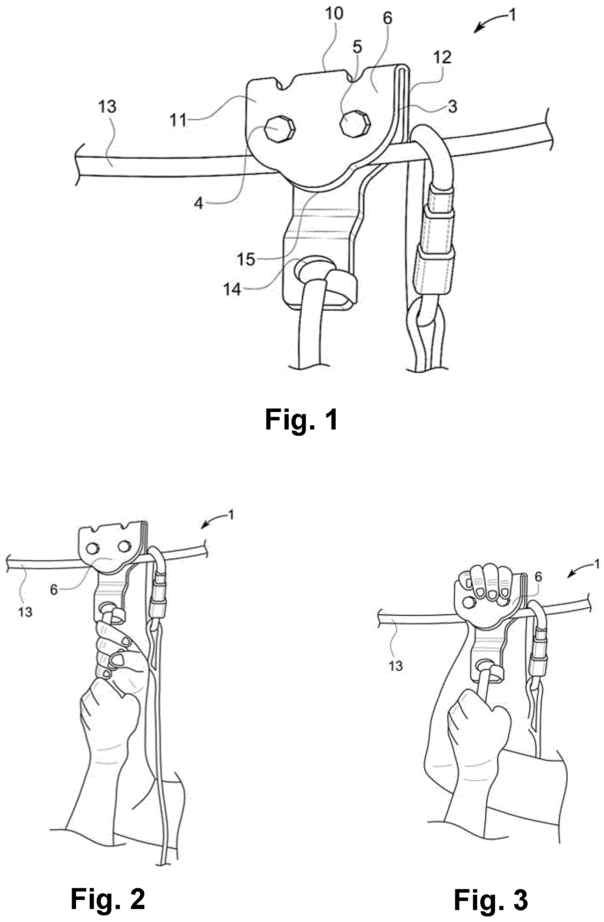

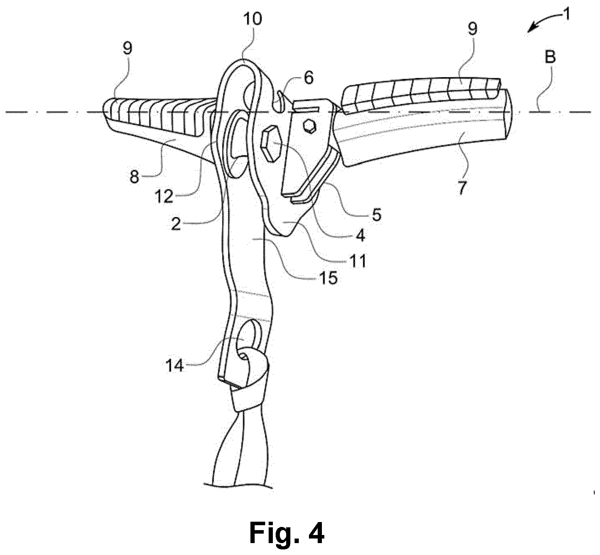

En référence aux figures 1 et 4, l'invention concerne une poulie 1 pour tyrolienne. Classiquement une telle poulie 1 comprend au moins deux réas 2, 3. Chaque réa 2, 3 est associé à un arbre 4, 5. Aussi, une poulie 1 comprend autant d'arbres 4, 5 que de réa. Une poulie 1 comprend encore une cage 6. La cage 6 est sensiblement en forme de U prismatique. La cage 6 comprend une première flasque 11, une deuxième flasque 12 et une base 10. La première flasque 11 forme une première branche du U. La première flasque 11 est sensiblement plane. La deuxième flasque 12 est sensiblement plane, sensiblement identique à la première flasque 11. Elle se superpose parallèlement à la première flasque 11, les deux flasques 11, 12 étant en regard. La base 10 relie rigidement les deux flasques 11, 12, en les espaçant, avantageusement sensiblement de la largeur des réas 2, 3. Une cage 6 peut venir de matière et telle qu'illustrée, être réalisée à partir d'une feuille de métal pliée en U de manière à former les deux flasques 11, 12 et la base 10.

Lesdits au moins deux arbres 4, 5 sont parallèles entre eux, coplanaires dans un plan P. Ils traversent, sensiblement perpendiculairement, les deux flasques 11, 12, auxquels ils sont aussi fixés. Lesdits au moins deux réas 2, 3 sont montés rotatifs, classiquement au moyen d'un palier, tel un roulement à billes. Chaque réa 2, 3 est monté autour de son arbre 4, 5 associé. Lesdites au moins deux réas 2, 3 sont disposés entre les deux flasques 11, 12. Le plan de rotation des réas 2, 3, passant par les gorges de roulage, en périphérie des réas 2, 3 se retrouve confondu avec un plan médiateur ML des deux flasques 11, 12.

La cage 6 comprend encore une ouverture 15, disposée du côté opposé à la base 10. Cette ouverture 15 permet d'engager la poulie 1 sur un câble ou corde de telle manière à appuyer la gorge des réas 2, 3 opposée à la base 10 sur le câble ou corde.

Lorsque la poulie 1 est en position sur un câble ou corde 13, le plan P des arbres 4, 5 est sensiblement horizontal, et le plan de rotation des réas 2, 3 est sensiblement vertical. Les réa 2, 3 sont disposées au-dessus du câble ou corde 13. La base 10 de la cage 6 est en haut.

La poulie 1 comprend encore un anneau ou crochet 14. L'anneau ou crochet 14 est disposé dans le plan médiateur ML des flasques 11, 12, afin que le point de suspension soit dans le plan de rotation des réas 2, 3. Selon le mode de réalisation illustré, l'anneau ou crochet 14 est réalisé de matière avec une des deux flasques 11, 12, qu'il prolonge du côté opposé à la base 10. Selon un autre mode de réalisation, l'anneau ou crochet 14 peut être un connecteur de type mousqueton, disposé perpendiculairement aux flasques 11,12.

Cet anneau ou crochet 14 permet d'accrocher un textile de type corde ou sangle, directement ou via un connecteur de type mousqueton, à la poulie 1. Ce textile est classiquement utilisé pour relier l'utilisateur, typiquement via un baudrier, à la poulie 1, à laquelle il peut ainsi être suspendu. Lorsque la poulie 1 est en position, sur un câble ou corde 13, l'anneau ou crochet 14 est en bas. Ainsi, l'utilisateur est suspendu sous la poulie 1 et sous le câble ou corde 13.

Tel qu'illustré à la figure 4, selon une caractéristique de l'invention, la poulie 1 comprend encore deux poignées 7, 8. Une première poignée 7 est disposée sur l'extérieur de la première flasque 11. Une deuxième poignée 8 est disposée sur l'extérieur de la deuxième flasque 12.

Ces poignées 7, 8, disposées de part et d'autre de la cage 6 permettent à l'utilisateur de poser ses deux mains pendant une descente. Lorsque la poulie 1 est en position sur un câble ou corde 13, les poignées s'étendent des deux côtés, sensiblement transversalement à la cage 6 et donc au câble ou corde 13, pendant leur utilisation. Les poignées 7, 8 assurent, les mains étant positionnées autour des poignées 7, 8, la sécurité des mains qui ne peuvent venir en contact avec le câble ou corde 13 ou à l'interface entre le câble ou corde 13 et les réas 2, 3.

De plus, du fait de leur position et orientation transverse à la cage 6 et au câble ou corde 13, elles permettent à l'utilisateur d'exercer un couple autour de l'axe de suspension vertical.

Selon une autre caractéristique, les deux poignées 7, 8 s'étendent sensiblement parallèlement aux arbres 4, 5. Ainsi, les poignées 7, 8 s'étendent sensiblement perpendiculairement aux flasques 11, 12 et donc perpendiculairement au câble ou corde 13 en utilisation.

Selon une autre caractéristique, les deux poignées 7, 8 sont disposées symétriquement l'une de l'autre, relativement à un plan médiateur des flasques 11, 12, en regard l'une de l'autre. Une telle disposition facilite l'ergonomie de prise en main et l'équilibre de l'utilisateur en utilisation.

Les poignées 7, 8 présentent avantageusement une extension sensiblement rectiligne, normale aux flasques 11, 12. Aussi, les deux poignées 7, 8 sont disposées sur un axe B commun aux deux poignées 7, 8. Cet axe B est parallèle au plan P des arbres 4, 5.

L'axe B des arbres 4, 5 peut être disposé au-dessus, comme illustré aux figures 4-6, du plan P des arbres 4, 5.

Cependant, selon une autre caractéristique, l'axe B des arbres 4, 5 est préférentiellement disposé, relativement au plan P des arbres 4, 5, du côté opposé à la base 10. Ainsi, Lorsque la poulie 1 est en position sur un câble ou corde 13, l'axe B des poignées 7, 8 se trouve en dessous du plan P des arbres 4, 5. Cette caractéristique améliore l'équilibre latéral de la poulie 1, autour du câble ou corde 13.

Dans le cas où la poulie 1 comprend exactement deux arbres 4, 5, selon une autre caractéristique, l'axe B est avantageusement disposé dans un plan médiateur M des deux arbres 4, 5. Une telle disposition où l'axe B se trouve à égale distance des deux arbre 4, 5, favorise l'équilibre longitudinal de la poulie 1.

Selon un mode de réalisation simple, les poignées 7, 8 sont fixes relativement à la cage 6. Ce mode de réalisation est simple et permet d'obtenir une poulie à faible coût. Cependant, en dehors de son utilisation, lorsque la poulie 1 n'est pas engagée sur câble ou corde, la poulie 1 est portée par l'utilisateur ou encore accrochée à son baudrier, à la ceinture. Aussi, de telles poignées 7, 8 fixes, faisant saillie depuis la cage 6, peuvent être source d'accrochage, de gêne et même devenir contondantes.

Aussi, selon une autre caractéristique, les poignées 7, 8 sont avantageusement escamotables. L'escamotage peut être obtenu selon tout mode de réalisation. Ainsi, selon une caractéristique (non illustrée) les poignées 7, 8 peuvent être aisément démontables/remontables relativement à la cage 6, par exemple au moyen d'un moyen de clipsage.

Selon une autre caractéristique, telle qu'illustrée, l'escamotage est réalisé par pliage des poignées 7, 8. Avantageusement, ce pliage est réalisé, en direction de la base 10. Ainsi, en utilisation, le mouvement de pliage/escamotage est opposé au mouvement d'appui en suspension de l'utilisateur et il n'est pas risqué un pliage intempestif.

Selon un mode de réalisation, le pliage s'effectue au moyen d'une articulation 16, d'axe sensiblement parallèle au plan P des arbres 4, 5, soit d'axe horizontal en utilisation, entre une fixation solidaire, par exemple par rivetage, vissage ou soudage, d'une flasque 11, 12 et une partie mobile.

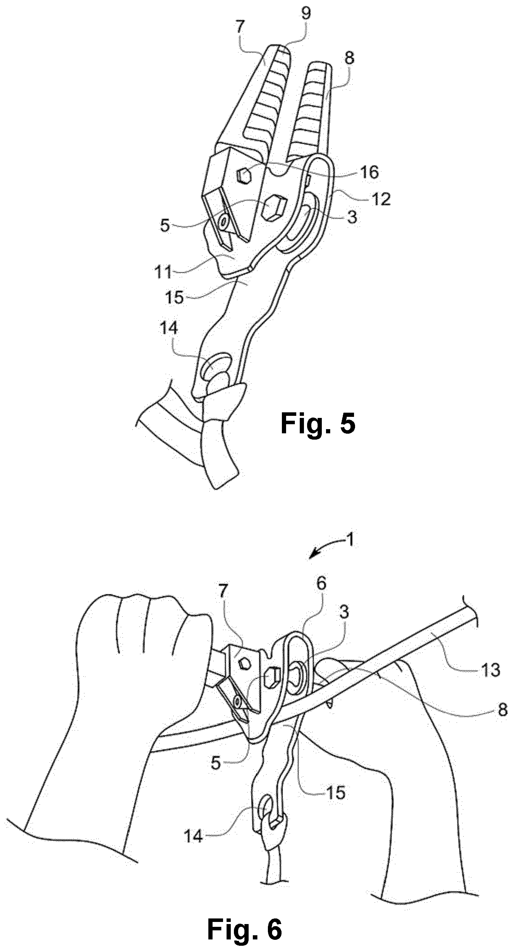

Lorsque la poulie 1 est en position sur un câble 13, le pliage remonte les poignées 7, 8 vers le haut, pour les placer verticales, sensiblement perpendiculaires aux arbres 4, 5. Les poignées 7, 8 repliées, sont alors parallèles aux flasques 11, 12. La figure 4 montre une poulie 1 avec les poignées 7, 8 dépliées, en configuration d'utilisation. La figure 5 montre la même poulie 1 avec les poignées repliées, correspondant plus à une configuration, plus compact, de rangement et/ou de transport.

Selon une autre caractéristique, une poignée 7, 8 et avantageusement les deux poignées 7, 8, comprennent encore un moyen de rappel, tel une lame élastique ou un ressort de torsion, tendant à pousser la poignée 7, 8 dans sa position escamotée. Il s'ensuit que par défaut, les poignées 7, 8 se trouvent en position escamotée. Ceci facilite le transport de la poulie 1 lorsqu'elle n'est pas utilisée sur un câble ou une corde, les poignées 7, 8 escamotées, alignées avec la cage 6, risquant moins d'accrocher. Au contraire, lorsque la poulie 1 est utilisée, les mains de l'utilisateur, en saisissant les poignées 7, 8, s'opposent aux moyens de rappel et placent les poignées 7, 8 en position d'utilisation, perpendiculaire à la cage 6. L'utilisation d'un moyen de rappel place automatiquement les poignées 7, 8, en position escamotée. Ceci évite à l'utilisateur d'oublier de les escamoter, en les plaçant par défaut dans une position plus sécurisé.

Il est également possible que les poignées reviennent automatiquement à leur position fermée dès qu'on les lâche, à la façon dont se rabattent pour les motos les cales pieds rabattables des conducteurs. Les poignées ainsi rabattues, ne gênent alors pas la progression de la moto et permettent d'éviter les dangers d'empalement ou chocs pour l'utilisateur sur des parcours en circuit.

Selon une autre caractéristique, une poignée 7, 8, ou avantageusement les deux poignées 7, 8 sont avantageusement recouvertes, au moins sur leur face tournée vers la base 10, d'une garniture 9. Cette garniture 9 est préférentiellement en matériau antidérapant, tel un caoutchouc. Elle peut encore être en tout matériau textile ou plastique, avantageusement souple, afin d'offrir un contact avec les mains plus agréable et/ou plus chaud que le métal, tout en réduisant le risque de glissement de la main, relativement à la poignée 7, 8. Lorsque la poulie 1 est en position sur un câble 13, la garniture 9 se trouve sur la face supérieure de la poignée 7, 8, où se trouve la face d'appui principale des mains.

Selon une autre caractéristique, une poignée 7, 8 comprend encore un arbre, disposé entre la cage 6 et la poignée 7, 8, préférentiellement entre l'articulation 16, si elle est présente, et la poignée 7, 8. Cet arbre autorise une rotation de la poignée 7, 8 autour de son axe d'extension B. Une telle rotation améliore l'ergonomie en ce qu'elle permet à l'utilisateur de tourner autour de l'axe B en fonction des phases d'utilisation, avec, par exemple, une orientation vers l'arrière de la poulie 1 au démarrage, une orientation sensiblement verticale pendant la descente et une orientation vers l'avant de la poulie 1 à l'arrivée.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

### Liste des signes de référence

1 : dispositif,
2, 3 : réa,
4, 5 : arbre,
6 : cage,
7, 8 : poignée,
9 : garniture,
10 : base,
11, 12 : flasque,
13 : câble ou corde,
14 : anneau ou crochet,
15 : ouverture,
16 : articulation.
B : axe des arbres,
ML : plan médiateur des flasques/longitudinal,
MT : plan médiateur des arbres/transverse,
P : plan des arbres.

## Revendications

1. Poulie (1) de sécurité et de confort pour tyrolienne, comprenant au moins deux réas (2, 3), autant d'arbres (4, 5) que de réa et une cage (6), la cage (6) comprenant une première flasque (11) sensiblement plane, une deuxième flasque (12) sensiblement plane, sensiblement identique à la première flasque (11), et sensiblement superposée parallèlement à la première flasque (11) et une base (10) reliant les deux flasques (11, 12), lesdits au moins deux arbres (4, 5) étant parallèles entre eux, coplanaires et traversant, sensiblement perpendiculairement, les deux flasques (11, 12) et lesdits au moins deux réas (2, 3) étant montés rotatifs, chacun autour de son arbre (4, 5) associé, entre les deux flasques (11, 12), ladite poulie comprenant encore une première poignée (7) disposée sur l'extérieur de la première flasque (11) et une deuxième poignée (8) disposée sur l'extérieur de la deuxième flasque (12), et **caractérisée en ce que** les poignées, sous l'action d'un moyen de rappel, reviennent automatiquement à une position fermée, dès qu'on les lâche, lesdites poignées étant escamotables par pliage autour d'une articulation (16).

2. Poulie (1) selon la revendication précédente, où les deux poignées (7, 8) s'étendent, en utilisation, sensiblement parallèlement aux arbres (4, 5).

3. Poulie (1) selon la revendication 1 ou 2, où les deux poignées (7, 8) sont disposées symétriquement, relativement à un plan médiateur des deux flasques (11, 12), en regard l'une de l'autre.

4. Poulie (1) selon la revendication 3, où un axe (B) commun aux deux poignées (7, 8) est parallèle à un plan des arbres (4, 5).

5. Poulie (1) selon une quelconque des revendications précédentes, où un axe (B) commun des poignées (7, 8) est disposé, relativement à un plan des arbres (4, 5), du côté opposé à la base (10).

6. Poulie (1) selon une quelconque des revendications 4 et 5, comprenant deux arbres (4, 5), où l'axe (B) des poignées (7, 8) est disposé dans un plan médiateur des deux arbres (4, 5).

7. Poulie (1) selon l'une quelconque des revendications précédentes, où une poignée (7, 8) comprend encore un moyen de rappel, tendant à escamoter la poignée (7, 8).

8. Poulie (1) selon l'une quelconque des revendications précédentes, où une poignée (7, 8) est recouverte, au moins sur sa face tournée vers la base (10), d'une garniture (9) en matériau antidérapant, tel un caoutchouc.

9. Poulie (1) selon l'une quelconque des revendications, où une poignée (7, 8) comprend encore un arbre autorisant une rotation de la poignée (7, 8) autour de son axe d'extension (B).

## Patentansprüche

1. Sicherheits- und Komfortrolle (1) für eine Seilbahn, umfassend mindestens zwei Umlenkrollen (2, 3), gleich viele Wellen (4, 5) wie Umlenkrollen und einen Käfig (6), wobei der Käfig (6) einen im Wesentlichen planen ersten Flansch (11), einen im Wesentlichen planen zweiten Flansch (12), der im Wesentlichen identisch mit dem ersten Flansch (11) ist und im Wesentlichen parallel zum ersten Flansch (11) überlagert ist, und eine Basis (10) umfasst, die die beiden Flansche (11, 12) verbindet, wobei die mindestens zwei Wellen (4, 5) parallel zueinander sind, koplanar und im Wesentlichen senkrecht durch die beiden Flansche (11, 12) verlaufen und die mindestens zwei Umlenkrollen (2, 3) jeweils drehbar um ihre zugehörige Welle (4, 5) zwischen den beiden Flanschen (11, 12) montiert ist, wobei die Rolle noch einen ersten Griff (7), der außen am ersten Flansch (11) angeordnet ist, und einen zweiten Griff (8) umfasst, der außen am zweiten Flansch (12) angeordnet ist,
und **dadurch gekennzeichnet, dass** die Griffe durch die Wirkung eines Rückstellmittels automatisch in eine geschlossene Position zurückkehren, sobald sie losgelassen werden, wobei die Griffe durch Biegen um ein Gelenk (16) versenkbar sind.

2. Rolle (1) nach dem vorhergehenden Anspruch, wobei sich die beiden Griffe (7, 8) im Gebrauch im Wesentlichen parallel zu den Wellen (4, 5) erstrecken.

3. Rolle (1) nach Anspruch 1 oder 2, wobei die beiden Griffe (7, 8) symmetrisch, relativ zu einer Mittelebene der beiden Flansche (11, 12), zueinander gerichtet angeordnet sind.

4. Rolle (1) nach Anspruch 3, wobei eine gemeinsame Achse (B) der beiden Griffe (7, 8) parallel zu einer Ebene der Wellen (4, 5) verläuft.

5. Rolle (1) nach einem der vorhergehenden Ansprüche, wobei eine gemeinsame Achse (B) der Griffe (7, 8) relativ zu einer Ebene der Wellen (4, 5) auf der dem Boden (10) gegenüberliegenden Seite angeordnet ist.

6. Rolle (1) nach einem der Ansprüche 4 und 5, umfassend zwei Wellen (4, 5), wobei die Achse (B) der Griffe (7, 8) in einer Mittelebene der beiden Wellen (4, 5) angeordnet ist.

7. Rolle (1) nach einem der vorhergehenden Ansprüche, wobei ein Griff (7, 8) noch ein Rückstellmittel umfasst, das zum Versenken des Griffs (7, 8) tendiert.

8. Rolle (1) nach einem der vorhergehenden Ansprüche, wobei ein Griff (7, 8) mindestens an seiner zur Basis (10) gerichteten Seite mit einem Belag (9) aus rutschfestem Material, wie Gummi, bedeckt ist.

9. Rolle (1) nach einem der Ansprüche, wobei ein Griff (7, 8) noch eine Welle umfasst, die eine Drehung des Griffs (7, 8) um seine Verlängerungsachse (B) ermöglicht.

## Claims

1. A safety and comfort pulley (1) for a zipline, comprising at least two sheaves (2, 3), as many shafts (4, 5) as sheaves and a cage (6), the cage (6) comprising a first substantially planar flange (11), a second substantially planar flange (12), substantially identical to the first flange (11) and substantially superposed parallel to the first flange (11), and a base (10) connecting the two flanges (11, 12), said at least two shafts (4, 5) being parallel to each other, coplanar and crossing, substantially perpendicularly, the two flanges (11, 12), and said at least two sheaves (2, 3) being rotatably mounted, each around its associated shaft (4, 5), between the two flanges (11, 12), the pulley further comprising a first handle (7) arranged on the outside of the first flange (11) and a second handle (8) arranged on the outside of the second flange (12),
and **characterized in that** the handles, through the action of a return means, automatically return to a closed position as soon as they are released, the handles being stowable by folding about a joint (16).

2. The pulley (1) according to the preceding claim, where the two handles (7, 8) extend, in use, substantially parallel to the shafts (4, 5).

3. The pulley (1) according to claim 1 or 2, where the two handles (7, 8) are arranged symmetrically, with respect to a midplane of the two flanges (11, 12), opposite one another.

4. The pulley (1) according to claim 3, where an axis (B) common to the two handles (7, 8) is parallel to a plane of the shafts (4, 5).

5. The pulley (1) according to any one of the preceding claims, where a common axis (B) of the handles (7, 8) is arranged, with respect to a plane of the shafts (4, 5), on the side opposite to the base (10).

6. The pulley (1) according to any one of claims 4 and 5, comprising two shafts (4, 5), where the axis (B) of the handles (7, 8) is arranged in a midplane of the two shafts (4, 5).

7. The pulley (1) according to any one of the preceding claims, where a handle (7, 8) further comprises a return means, tending to stow the handle (7, 8).

8. The pulley (1) according to any one of the preceding claims, where a handle (7, 8) is covered, at least over its face directed towards the base (10), with a lining (9) made of a non-slip material, such as a rubber.

9. The pulley (1) according to any one of the claims, where a handle (7, 8) further comprises a shaft enabling a rotation of the handle (7, 8) about its axis of extension (B).
